# EUROPÄISCHE PATENTSCHRIFT

(11) **EP 3 449 689 B1**
(45) Veröffentlichungstag und Bekanntmachung des Hinweises auf die Patenterteilung: **12.02.2020**
(21) Anmeldenummer: 17720127.4
(22) Anmeldetag: 28.04.2017
(51) Int. Cl.: H05B 3/26, B64D 13/08, F24D 13/02

(54) **HEIZVORRICHTUNG UND VERFAHREN ZUM HERSTELLEN DERSELBEN**
HEATING DEVICE AND METHOD FOR MANUFACTURING SAME
DISPOSITIF DE CHAUFFAGE ET PROCÉDÉ DE FABRICATION

(30) Priorität: 28.04.2016 DE 102016107908
(43) Veröffentlichungstag der Anmeldung: 06.03.2019
(73) Patentinhaber: JENOPTIK Advanced Systems GmbH, 22880 Wedel (DE)
(72) Erfinder: SEIDLER, Klaus, 25436 Uetersen (DE); ULKEN, Ulf-Dieter, 21220 Seevetal-Horst (DE)
(74) Vertreter: Waldauf, Alexander
(86) Internationale Anmeldenummer: PCT/EP2017/060156
(87) Internationale Veröffentlichungsnummer: WO 2017/186895

(56) Entgegenhaltungen:
- EP-A1- 3 015 360
- EP-A2- 0 109 019
- DE-A1-102005 058 241

## Beschreibung

Die Erfindung geht aus von einer Vorrichtung oder einem Verfahren nach Gattung der unabhängigen Ansprüche.

Bei beheizbaren Bodenplatten für einen Flugzeuginnenraum wird als Heizelement ein Widerstandsheizdraht auf einer normalen Bodenplatte verklebt und mit einer wärmeleitenden Folie bedeckt, um die Wärme zu verteilen. Diese beheizbaren Fußbodenplatten bestehen aus einer Sandwichstruktur aus Faserverbund und Wabenkern, auf die ein Heizelement aus Heizdrähten aufgeklebt ist. Oberhalb des Heizelements ist eine Schutzschicht und abschließend einer Titanfolie aufgebracht, auf der Beläge wie Teppich oder Ähnliches reversibel verklebt werden können. Bei dieser Anordnung können durch mechanische Beschädigungen oder eindringende Feuchtigkeit Fehlfunktionen entstehen.

Die US 2002 0168 184 und die DE 10 2005 058 241 A1 beschreiben den Aufbau einer beheizten Fußbodenplatte.

Vor diesem Hintergrund werden mit dem hier vorgestellten Ansatz eine Heizvorrichtung sowie ein Verfahren zum Herstellen einer Heizvorrichtung gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Durch die Verwendung einer Heizschicht aus einem Widerstandsmaterial mit einem positiven Temperaturkoeffizienten, einem sogenannten Kaltleiter oder PTC-Widerstand (PCT; engl. positive temperature coefficient), kann beispielsweise eine für einen Flugzeuginnenraum einsetzbare Bodenplatte realisiert werden, die gute mechanische und elektrische Eigenschaften aufweist. Insbesondere kann die Heizschicht relativ unempfindlich gegenüber mechanischen Beschädigungen und überhitzungssicher ausgeführt werden. Auf diese Weise kann eine hohe Betriebssicherheit und Ausfallsicherheit erreicht werden.

Eine Heizvorrichtung für einen Flugzeuginnenraum weist die folgenden Merkmale auf:
eine mechanisch belastbare Tragstruktur;
eine mechanisch belastbare und wärmeleitende Deckstruktur; und
einen Heizer zum Umwandeln von elektrischer Energie in Wärmeenergie, wobei der Heizer zwischen der Tragstruktur und der Deckstruktur angeordnet ist und eine Heizschicht aus einem Widerstandsmaterial mit einem positiven Temperaturkoeffizienten aufweist.

Lediglich beispielhaft kann eine Oberfläche der Deckstruktur als Trittfläche einer Fußbodenplatte ausgebildet sein. Somit kann der beschriebene Ansatz vorteilhaft zur Realisierung einer beheizbaren Fußbodenplatte eingesetzt werden. Die Deckstruktur kann eine beklebbare Oberfläche aufweisen, um beispielsweise einen Teppichbelag darauf zu verkleben. Vorzugsweise kann diese Oberfläche insofern modifiziert sein, dass sie schnitt- und abreißfest ausgebildet ist, um einem wiederholten Wechsel von beispielsweise Teppichbelägen, unter Anwendung von Werkzeugen wie Messern oder ähnlich, Stand zu halten.

Unter einer Tragstruktur kann ein Laminat verstanden werden, das eine hohe Steifigkeit aufweist. Insbesondere kann die Tragstruktur einen Sandwichaufbau aus faserverstärkten Deckschichten und einem dazwischen angeordneten leichtgewichtigen Kernmaterial aufweisen. Die Tragstruktur kann plattenartig ausgeformt sein. Die Tragstruktur kann wärmeisolierend sein. Die Tragstruktur dient vornehmlich als Isolationsstruktur ist aber dort wo sie aufgebracht ist, als Teil der tragenden Gesamtanordnung zu verstehen. Das Kernmaterial kann beispielsweise ein Hartschaum oder ein Wabenmaterial sein. Die Deckstruktur kann plattenartig ausgeformt sein. Die Deckstruktur kann einen Sandwichaufbau aufweisen. Wird das Widerstandsmaterial von einem elektrischen Strom durchflossen, so erwärmt es sich aufgrund seines elektrischen Widerstands. Dazu kann der Heizer elektrische Kontakte aufweisen, zwischen denen das Widerstandsmaterial angeordnet ist. Das Widerstandsmaterial kann als eine flächige Schicht ausgeformt sein. Der positive Temperaturkoeffizient bewirkt eine Vergrößerung des elektrischen Widerstands des Widerstandsmaterials bei steigender Temperatur des Widerstandsmaterials. Dadurch wird eine Leistungsaufnahme selbstregelnd begrenzt und es kann auf eine elektronische Temperaturregelung beziehungsweise Leistungsbegrenzung verzichtet werden. Vorteilhafterweise bietet das Widerstandsmaterial aufgrund seines positiven Temperaturkoeffizienten einen Überhitzungsschutz, sodass auf einen zusätzlichen Temperatursensor verzichtet werden kann.

Die Deckstruktur kann unempfindlich gegen mechanische Einwirkungen ausgeführt sein, wie sie üblicherweise im Umfeld der Heizvorrichtung auftreten. Die Deckstruktur verhindert, dass der Heizer für Umwelteinflüsse zugänglich wird und beispielsweise durch Korrosion beschädigt wird. Ebenso kann durch die Deckstruktur verhindert werden, dass beispielsweise ein Draht des Heizers beschädigt oder durchtrennt wird. Somit kann der Heizer durch die Deckstruktur vor Ausfällen geschützt werden. Die Deckstruktur kann die Funktion einer Schutzplatte ausüben. Um die Wärme an die Oberfläche der Deckstruktur transportieren zu können, ist die Deckstruktur wärmeleitend ausgerüstet. Durch die Deckstruktur ist das Heizelement vor mechanischen Einwirkungen und Umwelteinflüssen sicher geschützt. Dadurch kann eine lange Lebensdauer der Heizvorrichtung, beispielsweise in Form einer Bodenplatte, erreicht werden. Die Deckstruktur dient als tragende Struktur der Platte über die gesamte Kontur der Platte.

Die Deckstruktur kann ein Laminat aus einem Kern zwischen zwei Decklagen sein. Der Kern kann ein Wabenkern aus einem Metallmaterial sein. Ein Laminat mit Wabenkern weist ein geringes Gewicht bei einer hohen Steifigkeit auf. Ein Metallmaterial weist einen geringen Wärmewiderstand auf. Durch den metallischen Wabenkern kann die hohe Steifigkeit in Kombination mit der guten Wärmeleitfähigkeit erreicht werden. In einer alternativen Ausführungsform kann der Kern ein Wabenkern aus einem nichtmetallischen Material sein. Eine gute Wärmeleitfähigkeit zwischen den zwei Decklagen kann dadurch erreicht werden, dass die Zellwände des Wabenkerns mit einem Wärmeleitkleber verklebt sind, der mit Silber und/ oder anderen Partikeln angereichert ist, die die Wärmeleitung verbessern.

Eine Oberfläche des Wabenkerns kann einen Korrosionsschutz aufweisen. Beispielsweise kann die Oberfläche anodisiert oder anders geeignet gegen Korrosion geschützt sein. Insbesondere durch ein Anodisieren kann ein wirksamer Korrosionsschutz erreicht werden, sodass sogar bei einer Beschädigung einer Decklage eine Schwächung der Deckstruktur verhindert wird. Außerdem kann der metallische Kern so angeordnet werden, dass er nicht im direkten elektrisch leitenden Kontakt mit einem Korrosionspartner gemäß einem Elektronegativitätspotential steht.

Der Kern kann ebenso aus einem wärmeisolierenden Material sein. Dabei können die Decklagen durch den Kern mit wärmeleitenden Wärmebrücken verbunden sein. Der Kern kann beispielsweise aus einem Hartschaum sein. Der Hartschaum kann einfach verarbeitet werden. Wärmebrücken können eine Decklage mit der anderen Decklage verbinden. Die Wärmebrücken können zumindest einen Anteil eines Metallmaterials aufweisen. Die Wärmebrücken können auch vollständig aus Metallmaterial bestehen. Die Wärmebrücken können nachträglich in das Kernmaterial eingebracht werden. Die Wärmebrücken können auch von dem Kernmaterial umschäumt werden. Die Decklagen können mittels eines, durch mineralische Additivierung zur Wärmeleitung ertüchtigten Epoxidharzes ausgebildet sein. Die Wärmebrücken können auch von einem, durch mineralische Additivierung zur Wärmeleitung ertüchtigten Matrixharzes umgeben sein. Eine solche Benetzung hat zudem den Effekt des Korrosionsschutzes an möglicherweise metallischen Fäden.

Gemäß einer Ausführungsform können die Wärmebrücken durch zumindest einen in den Kern eingenähten Faden realisiert sein. Der zumindest eine Faden kann zumindest teilweise aus Metall bestehen. In den Kern eingenähte Abschnitte des Fadens können sich durch die gesamte Dicke des Kerns hindurch erstrecken. Durch das Einnähen können die Wärmebrücken sehr einfach hergestellt werden. Die Fäden werden gemäß einer Ausführungsform in einem Infusionsverfahren von der Matrix benetzt und damit auch noch gegen Korrosion geschützt. Somit können die Wärmebrücken ergänzend durch modifiziertes Matrix-Material realisiert sein.

Die Decklagen können in einem umlaufenden Randbereich direkt miteinander verbunden sein. Durch eine direkte Verbindung kann ein dichter Abschluss erreicht werden. Die Deckstruktur kann so hermetisch versiegelt sein. Ein Eindringen von Feuchtigkeit kann sicher verhindert werden.

Der Heizer kann unter Verwendung eines elastischen oder gleitebenen Materials mit der Tragstruktur und alternativ oder ergänzend mit der Deckstruktur verbunden sein. Das elastische Material ermöglicht eine durch eine Wärmeausdehnung der Heizschicht hervorgerufene Bewegung der Heizschicht gegenüber der Tragstruktur und/oder der Deckstruktur. Das gleitebenen Material ermöglicht in entsprechender Weise eine solche Bewegung, indem es ein gleiten der Heizschicht auf einer Oberfläche des gleitebenen Materials ermöglicht.

Die Tragstruktur und die Deckstruktur können in einem Randbereich zumindest abschnittsweise miteinander verbunden sein. Die Heizschicht kann zwischen der Tragstruktur und der Deckstruktur schwimmend angeordnet sein. Eine schwimmende Anordnung ermöglicht eine Wärmeausdehnung der Heizschicht unabhängig von der Tragstruktur und der Deckstruktur.

Die Heizschicht kann fluiddicht zwischen der Tragstruktur und der Deckstruktur eingeschlossen sein. Auf diese Weise kann die Heizschicht vor durch eindringende Feuchtigkeit hervorgerufene Schäden geschützt werden.

Die Heizschicht kann eine aus einem flüssigen oder streichfähigen Widerstandsmaterial auf die Tragstruktur oder die Deckstruktur aufgebrachte Schicht sein. Auf diese Weise kann eine große Flexibilität der Heizschicht erreicht werden. Gemäss der Erfindung weist die Heizschicht zumindest bereichsweise Perforationen auf. Durch die Perforation der Heizschicht können Hohlräume zwischen der Tragstruktur und der Deckstruktur bereitgestellt werden. Diese Hohlräume können mit einem Material ausgefüllt werden. Das Material kann ein sich aushärtender Klebstoff sein. Eine derartige Anordnung ermöglicht eine mechanische Entkopplung zwischen der Heizschicht und der übrigen Statik, also der Tragstruktur und der Deckstruktur. Eine derartige Anordnung ist insbesondere dann von Vorteil, wenn die Heizschicht nicht in der Lage ist, Kräfte weiterzuleiten.

Die Heizschicht des Heizers kann redundant kontaktiert sein. Eine redundante Kontaktierung kann durch eine mehrfache Verbindung zwischen einem elektrischen Anschluss und dem Heizer ausgeführt sein. Ebenso können mehrere Leitungen zu mehreren Anschlüssen vorgesehen sein. Durch die redundante Kontaktierung kann der Heizer auch dann noch sicher betrieben werden, wenn eine oder mehrere Leitungen durch beispielsweise mechanische oder chemische Einwirkungen unterbrochen werden. Ein erster elektrischer Anschluss der Heizschicht und ein zweiter elektrischer Anschluss der Heizschicht können als Interdigitalelektroden ausgebildet sein. Die Interdigitalelektroden können eine Mehrzahl ineinandergreifender Leiterbahnen umfassen. Interdigitalelektroden können als ineinandergreifende kammförmige Leiterbahnen ausgeführt sein. Beide Elektroden können auf der gleichen Oberfläche des Widerstandsmaterials angeordnet sein. Interdigitalelektroden können einfach hergestellt werden. Beispielsweise können die Interdigitalelektroden durch eine bedruckte Folie ausgebildet sein. Ebenso können die Interdigitalelektroden direkt auf das Widerstandsmaterial aufgebracht beziehungsweise gedruckt werden. Vorteilhafterweise hat eine Unterbrechung einer Leiterbahn einer der Interdigitalelektroden nur einen geringen Einfluss auf die Gesamtfunktion der Heizvorrichtung.

Weiterhin wird ein Verfahren zum Herstellen einer Heizvorrichtung für einen Flugzeuginnenraum vorgestellt, wobei das Verfahren die folgenden Schritte aufweist: Bereitstellen einer mechanisch belastbaren Tragstruktur und einer mechanisch belastbaren und wärmeleitenden Deckstruktur; und Anordnen eines Heizers zum Umwandeln von elektrischer Energie in Wärmeenergie zwischen der Tragstruktur und der Deckstruktur, wobei der Heizer eine Heizschicht aus einem Widerstandsmaterial mit einem positiven Temperaturkoeffizienten aufweist.

Ausführungsbeispiele des hier vorgestellten Ansatzes sind in den Zeichnungen dargestellt und in der nachfolgenden Beschreibung näher erläutert. Es zeigt:
Fig. 1 eine schematische Darstellung einer Heizvorrichtung gemäß einem Ausfü hrungsbeispiel;
Fig. 2 eine Teilschnittdarstellung einer Fußbodenplatte mit einer Heizvorrichtung gemäß einem Ausführungsbeispiel;
Fig. 3 eine weitere Teilschnittdarstellung einer Fußbodenplatte mit einer Heizvorrichtung gemäß einem Ausführungsbeispiel;
Fig. 4 eine Darstellung eines Heizers gemäß einem Ausführungsbeispiel;
Fig. 5a eine Darstellung eines Heizers gemäß einem Ausführungsbeispiel;
Fig. 5b eine Teilschnittdarstellung einer Fußbodenplatte mit einer Heizvorrichtung gemäß Fig. 5a;
Fig. 6 eine Darstellung einer Fußbodenplatte für einen Flugzeuginnenraum gemäß einem Ausführungsbeispiel; und
Fig. 7 ein Ablaufdiagramm eines Verfahrens zum Herstellen einer Heizvorrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

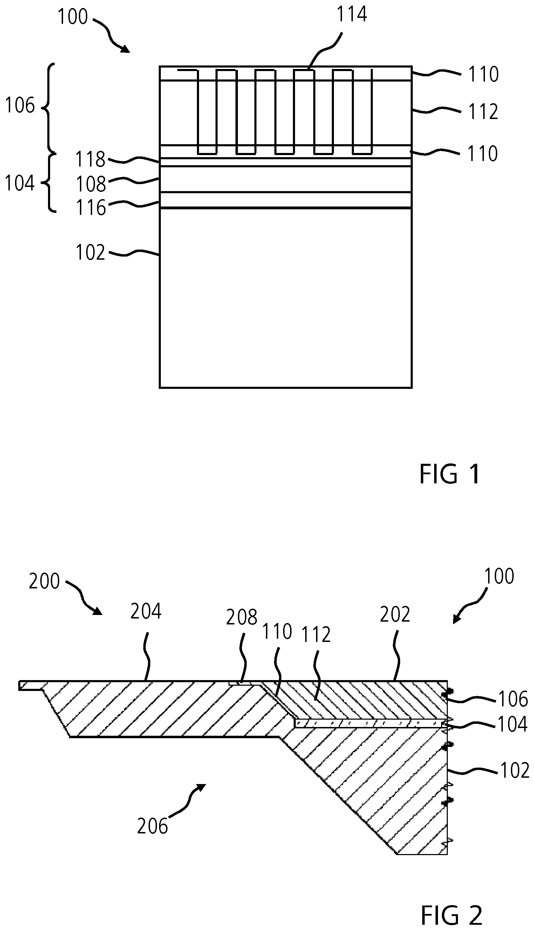

Fig. 1 zeigt eine rein schematische Darstellung einer Heizvorrichtung 100 gemäß einem Ausführungsbeispiel. Dabei ist ein genereller Plattenaufbau der Heizvorrichtung 100 gezeigt. Die Heizvorrichtung 100 ist gemäß einem Ausführungsbeispiel als eine Bodenplatte, beispielsweise für einen Passagierraum eines Flugzeugs, ausgeführt oder in eine solche Bodenplatte integrierbar.

Die Heizvorrichtung 100 weist einen Sandwichaufbau aus verschiedenen Schichten auf. Auf einer Tragstruktur 102 ist ein Heizer 104 und darauf eine Deckstruktur 106 angeordnet. Der Heizer 104 wird nachfolgend auch als Heizeinrichtung oder Heizelement bezeichnet. Die Tragstruktur 102 ist mechanisch belastbar, also biegesteif ausgeführt und gemäß diesem Ausführungsbeispiel dazu ausgebildet, eine auf der Heizvorrichtung 100 lastende Last auf am Rand der Heizvorrichtung 100 angeordnete Lagerstellen zu übertragen. Der Heizer 104 umfasst eine Heizschicht aus einem Widerstandsmaterial 108, das sich bei einem elektrischen Stromfluss durch das Material erwärmt. Der Heizer 104 ist also dazu ausgebildet, elektrische Energie in Wärmeenergie umzuwandeln. Die Deckstruktur 106 ist ebenfalls mechanisch belastbar. Die Deckstruktur 106 ist zumindest dazu ausgebildet, durch die Last auftretende Lastspitzen über eine Fläche des Heizers 104 zu verteilen, um den Heizer 104 vor mechanischer Beschädigung zu schützen. Um die von dem Heizer 104 produzierte Wärme ableiten zu können, ist die Deckstruktur 106 ferner wärmeleitend.

In einem Ausführungsbeispiel ist die Deckstruktur 106 als Laminat aus zwei Deckschichten 110 und einem wärmeleitenden Kern 112 ausgeführt. Der Kern 112 ist dabei eine Wabenstruktur aus einem Metallmaterial. Dabei ist ein hoher Gehalt an Aluminium aufgrund seines geringen Wärmewiderstands bei dem Metallmaterial vorteilhaft. Die Deckschichten 110 können ebenfalls aus dem Metallmaterial sein. In einem Ausführungsbeispiel erfolgt die Wärmeleitung durch eine Aluminiumwabe 112 direkt oberhalb des Heizers 104. Aluminium leitet die Wärme außerordentlich gut.

Um Korrosionsprobleme zu vermeiden, falls Feuchtigkeit durch Beschädigung oder Diffusionseffekte in die Wabe eindringt, ist in einem Ausführungsbeispiel die Oberfläche der Aluminiumwabe 112 vorzugsweise durch eine spezielle Umwandlung in einem Anodisierungsprozess geschützt, mit der eine Korrosion ausgeschlossen wird, auch wenn Feuchtigkeit eindringt. Im Betrieb des Heizers würde diese durch Diffusionsvorgänge eingedrungene Feuchtigkeit ebenso durch Diffusion wieder aus der Platte ausgetrieben.

Gemäß einem Ausführungsbeispiel erfolgt eine spezielle Ertüchtigung des Decklaminats ebenso wie der Sandwichstruktur 106 zur Wärmeleitung, beispielsweise unter Verwendung von wärmeleitendem Material. Eine solche Ertüchtigung ist nötig, weil Laminate aus Carbonfasern, Aramidfasern beziehungsweise Glasfasern und Epoxidharzen sowie insbesondere die an sich für Decklagen 110 geeigneten dicken Sandwichstrukturen mit Wabenkernen oder Schäumen die Wärme eher isolieren, als sie zu leiten.

In einem Ausführungsbeispiel ist die Deckstruktur 106 als Sandwich aus zwei Deckschichtlaminaten 110 und einem wärmeisolierenden Kern 112 ausgeführt. Dabei sind von Deckschicht 110 zu Deckschicht 110 Wärmebrücken 114 angeordnet. Die Wärmebrücken 114 sind dabei aus einem wärmeleitenden Material, das insbesondere einen Metallanteil aufweist. Beispielsweise sind die Wärmebrücken 114 aus einem zumindest teilweise metallischen Faden oder Metalldraht ausgeformt. Die Wärmebrücken 114 durchdringen die Deckschichten 110 und den Kern 112 und verbinden beide wärmeleitend. Die Wärmebrücken 114 sind beispielsweise durch einen Nähprozess in die Deckstruktur 106 eingebracht. Dabei können die Deckschichten 110 ebenfalls für Wärmeleitung ertüchtigt sein.

Gemäß einem Ausführungsbeispiel für Einsätze, in denen eine Aluminiumwabe 112 nicht gewünscht wird, wird die Bodenplatte 106 mit einem Sandwichaufbau hergestellt, bei dem in Dickenrichtung Wärmebrücken 114 in Form von wärmeleitenden Fäden 114 eingenäht werden, die die obere Decklage 110 des Sandwichverbunds 106 mit der unteren Decklage 110 wärmeleitend verbinden. Die Fäden 114 können beispielsweise durch einen Silberanteil in den Fäden 114 eine erhöhte Wärmeleitung aufweisen. Ebenso können Reinmetallfäden 114 verwendet werden. Eine solche Platte 106 kann in einem Infusionsprozess hergestellt werden. Das Harz läuft dabei während der Infusion an den Fäden 114 entlang, um diese abermals in Harz einzubetten und somit elektrisch komplett zu isolieren.

In einem Ausführungsbeispiel sind die Wärmebrücken 114 unter Zugkraft gesetzt und sind in die Deckschichten 110 eingeschnitten, um eine ebene Oberfläche der Deckstruktur 106 zu erhalten.

In einem Ausführungsbeispiel ist das Widerstandsmaterial 108 des Heizers 104 auf einer flexiblen Folie 116 aufgebracht. Die Folie 116 ist mit der Tragstruktur 102 verklebt. Durch die flexible Folie 116 ist das Material 108 in seiner Wärmeausdehnung unbehindert.

Auf einer der Folie 116 gegenüberliegenden Seite des Widerstandsmaterials 108 ist eine Kontaktierungsebene 118 angeordnet. Dabei sind beide elektrischen Kontakte auf der gleichen Seite des Widerstandsmaterials 108 angeordnet.

Fig. 2 zeigt eine Teilschnittdarstellung einer Fußbodenplatte 200 mit einer Heizvorrichtung 100 gemäß einem Ausführungsbeispiel. Mit anderen Worten zeigt Fig. 2 eine Schnittskizze der Einzelschichten exemplarisch. Die Heizvorrichtung 100 entspricht dabei im Wesentlichen der Heizvorrichtung in Fig. 1. Hier sind der Heizer 104 und die Deckstruktur 106 in einer Ausnehmung der Tragstruktur 102 angeordnet. Die Ausnehmung und die Deckstruktur 106 weisen dabei gegengleich abgeschrägte Ränder auf, an denen die Deckstruktur 106 auf der Tragstruktur aufliegt. Eine Oberfläche der Deckstruktur 106 bildet eine Trittfläche 202 der Fußbodenplatte 200 aus. Die Tragstruktur 102 weist in einem Randbereich 204 eine Lagerstelle 206 zum Auflegen der Fußbodenplatte 200 auf einen nicht dargestellten Rahmen auf. Die Lagerstelle 206 ist ebenfalls mit abgeschrägten Kanten ausgeführt. Der Randbereich 204 ist als Flansch mit einer geringen Dicke ausgeführt. Der Flansch 204 erstreckt sich in einer Haupterstreckungsrichtung der Fußbodenplatte 200. Gemäß einem Ausführungsbeispiel ist die Deckstruktur 106 mit Wärmebrücken ausgeführt, um die Wärmeleitung zwischen Heizer 104 und Trittfläche 202 zu verbessern.

In einem Ausführungsbeispiel ist der Heizer 104 zwischen der Deckstruktur 106 und der Tragstruktur 102 schwimmend angeordnet. Damit kann sich der Heizer 104 bei Erwärmung ungehindert ausdehnen und beim Erkalten ungehindert zusammenziehen. Beispielsweise kann eine Folie mit einem geringen Reibwert zwischen der Tragstruktur 102 und/oder der Deckstruktur 106 und dem Heizer 104 angeordnet sein.

In einem Ausführungsbeispiel ist die Decklage 106 als Laminat mit Decklagen 110 ausgeführt. Dabei überragen die Decklagen 110 den Kern 112 in einem Randbereich 208 und sind miteinander fluiddicht verbunden.

Zur Vermeidung des Eindringens von Feuchtigkeit in die Fußbodenplatte weist die Platte 106 ringsherum einen geschlossenen Aufbau auf. Dies bedeutet, dass bei der Herstellung die untere Decklage 110 an die obere Decklage 110 geführt und im Aushärteprozess kohäsiv verbunden wird. Dadurch ist das Eindringen von Feuchtigkeit aus dem Randbereich, der bei üblichen Platten mit sogenannter Randfüllmasse abgedichtet wird, nicht mehr möglich. Dort wo nachträglich, also adhäsiv verbunden wird, wird vollflächig versiegelt, sodass auch hier keine Feuchtigkeit mehr eindringen kann.

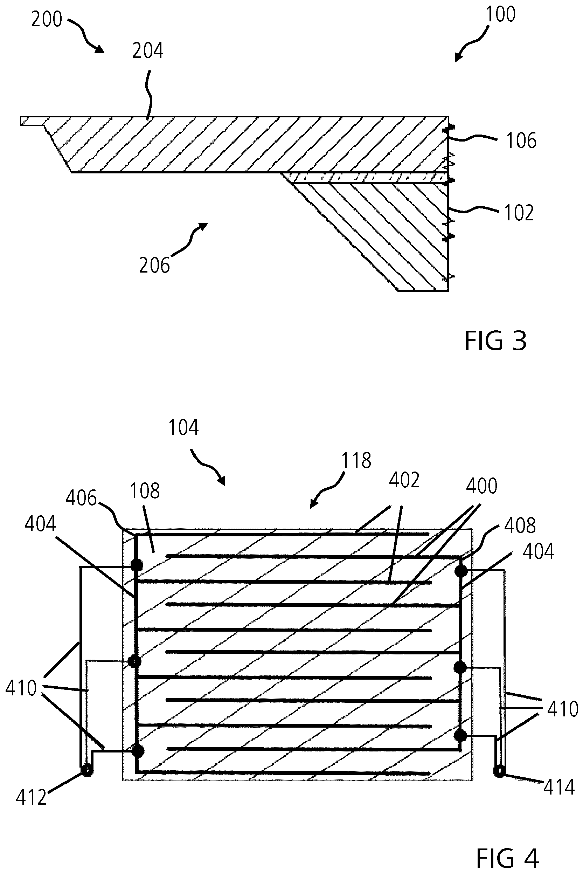

Fig. 3 zeigt eine weitere Teilschnittdarstellung einer Fußbodenplatte 200 mit einer Heizvorrichtung 100 gemäß einem anderen Ausführungsbeispiel. Die Fußbodenplatte 200 entspricht im Wesentlichen der Fußbodenplatte in Fig. 2. Im Gegensatz dazu ist der Flansch 204 durch die Deckstruktur 106 ausgebildet. Die Deckstruktur 106 wird in diesem Falle zur Tragstruktur und überragt den zur Isolierstruktur 102 gewordenen unteren Teil der Platte, die nur noch einen geringen Beitrag zur Steifigkeit und Festigkeit der Gesamtanordnung liefert, im Randbereich 204. Die Lagerstelle 206 ist hier durch die Deckstruktur 106 ausgebildet. Gemäß einem Ausführungsbeispiel ist die Deckstruktur in diesem Falle so ausgebildet, dass die Randbereiche nicht wie in Fig. 2 dargestellt geschlossen sind, sondern dass diese durch ein Verfahren von Randfüllmassen verschlossen werden, in die die Inserts zur Verschraubung der Platte an der Lagerstelle 206 gleich integriert werden können.

Fig. 4 zeigt eine Darstellung eines Heizers 104 gemäß einem Ausführungsbeispiel. Der Heizer 104 entspricht im Wesentlichen einem der in den Figuren 1 bis 3 dargestellten Heizern. Der Heizer 104 weist eine flächige Schicht aus einem Widerstandsmaterial 108 mit einem elektrischen Widerstand mit einem positiven Temperaturkoeffizienten auf. Dabei steigt der elektrische Widerstand des Widerstandsmaterials 108 mit steigender Temperatur an und bei gleichbleibender elektrischer Spannung fließt weniger elektrischer Strom durch die Schicht, was eine Leistungsaufnahme des Heizers 104 verringert.

Gemäß einem Ausführungsbeispiel weist die aus dem Widerstandsmaterial 108 gebildete Schicht eine Breite und eine Länge von jeweils zumindest 4 cm auf. Somit wird das Widerstandsmaterial 108 gemäß einem Ausführungsbeispiel nicht in Form von Drähten oder schmalen Bändern, sondern als flächige Schicht mit einer Fläche von beispielsweise zumindest 20cm² verwendet.

Auf der Schicht aus Widerstandsmaterial 108 sind in der Kontaktierungsebene 118 parallele Leiterbahnen 400, 402 gleichmäßig verteilt angeordnet. Benachbarte Leiterbahnen 400, 402 sind voneinander elektrisch isoliert. Jede zweite Leiterbahn 400, 402 ist mit einem Stromsammler 404 elektrisch miteinander verbunden. Die Leiterbahnen 400, 402 und Stromsammler 404 bilden auf der Schicht aus Widerstandsmaterial 108 Interdigitalelektroden 406, 408 aus. Die Stromsammler 404 sind hier je an drei unterschiedlichen Stellen elektrisch kontaktiert und über getrennte Leiter 410 mit elektrischen Anschlüssen 412, 414 des Heizers 104 verbunden. Durch die getrennten Leiter 410 ist die Kontaktierung redundant und eine Funktion des Heizers 104 auch dann noch sichergestellt, wenn zwei der Leiter 410 oder der Stromsammler 404 unterbrochen werden.

Die ersten Leiterbahnen 400 und die zweiten Leiterbahnen 402 sind alternierend benachbart zueinander angeordnet, sodass die Leiterbahnen 400, 402 fingerartig ineinandergreifen. Gemäß einem Ausführungsbeispiel weist jede Interdigitalelektrode 406, 408 zumindest drei erste Leiterbahnen 400 und zumindest drei zweite Leiterbahnen 402 auf.

Mit anderen Worten zeigt Fig. 4 einen PTC-Heizer 104 mit elektrisch leitfähiger Fingerstruktur 118. Die Kontaktierung des Widerstandsmaterials 108, das gemäß einem Ausführungsbeispiel in Form einer PTC-Schicht oder eines PTC-Heizlacks ausgeführt ist, erfolgt durch eine elektrisch leitfähige Fingerstruktur 400, 402 mit Stromsammelbereichen 404, die direkt auf das Widerstandsmaterial 108 aufgetragen sind. Die Fingerstruktur 400, 402 und die Stromsammelbereiche 404 können durch Auftragen eines leitfähigen Lacks oder durch Aufkleben ausgestanzter oder geätzter Leiterfolien erzeugt werden.

Zur Reduzierung der Auswirkung einer punktuellen Beschädigung der Heizerebene sind die Stromsammelbereiche 404 mehrfach mit den elektrischen Anschlusspunkten 412, 414 verbunden.

Die Heizleistung des derart aufgebauten Heizelements 104 ergibt sich aus dem spezifischen Flächenwiderstand des Heizlacks 108, der aufgetragenen Dicke des Widerstandsmaterials 108, beispielsweise in Form eines Heizlacks, und des Abstands zwischen der elektrisch leitfähigen Fingerstruktur 400, 402 und ist damit an die Heizleistungserfordernisse anpassbar.

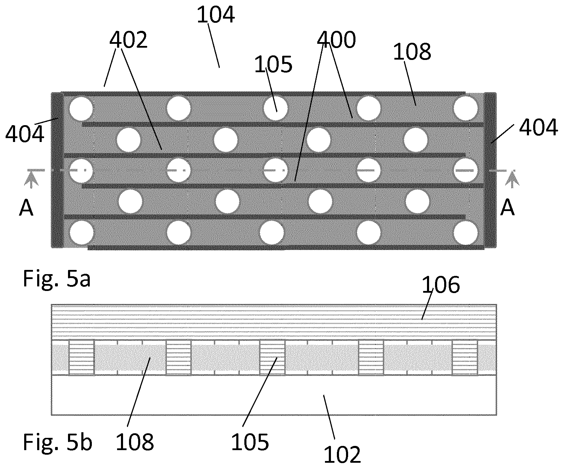

Die Fig. 5a zeigt eine Darstellung eines Heizers 104 gemäß einem weiteren Ausführungsbeispiel der vorliegenden Erfindung. Der Heizer 104 entspricht im Wesentlichen einem der in den Figuren 1 bis 3 dargestellten Heizern. Der Heizer 104 weist eine flächige Schicht aus einem Widerstandsmaterial 108 mit einem elektrischen Widerstand mit einem positiven Temperaturkoeffizienten auf. Im Unterschied zur Heizschicht gemäß Fig. 4 weist die Heizschicht kreisrunde Perforationen 105 auf. Die Perforationen sind derart ausgebildet, dass Hohlräume zwischen der Deckstruktur 106 und der Tragstruktur 102 entstehen, wie dies der Fig. 5b zu entnehmen ist. Diese Hohlräume sind mit einem Klebstoff gefüllt, so dass eine mechanische Entkopplung zwischen der Heizschicht und der Deck- und Tragstruktur bereitgestellt wird.

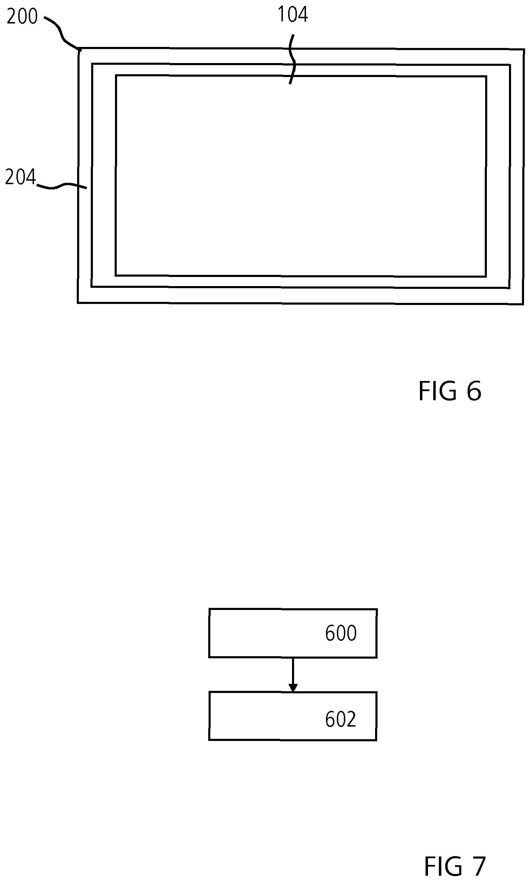

Fig. 6 zeigt eine Darstellung einer Fußbodenplatte 200 für einen Flugzeuginnenraum gemäß einem Ausführungsbeispiel. Die Fußbodenplatte 200 entspricht dabei im Wesentlichen den in den Figuren 2 und 3 dargestellten Fußbodenplatten. Die Fußbodenplatte 200 ist rechteckig. Der Randbereich 204 ist umlaufend um die Fußbodenplatte 200 ausgeführt. Der Heizer 104 ist mittig in der Fußbodenplatte angeordnet und kleiner als eine Gesamtfläche der Fußbodenplatte 200.

Es wird ein Aufbau einer schadenstoleranten beheizbaren Fußbodenplatte 200 für Flugzeuge (FPH "Floor Panel Heated") vorgestellt. Der hier vorgestellte Ansatz ist generell für eine flächenmäßige Beheizung verwendbar. Dabei erfolgt die Beheizung der Fußbodenplatte 200 mit einem Heizer 104 in PTC-Technologie. Die Fußbodenplatte 200 weist einen innovativen Plattenaufbau zur Reduzierung von Beschädigungen auf.

Ein PTC-Material als Widerstandsmaterial weist einen positiven Temperaturkoeffizienten auf. Heizermaterialien mit dieser Eigenschaft besitzen inhärente temperaturbegrenzende Eigenschaften, indem der elektrische Widerstand mit steigender Temperatur ansteigt und dadurch die aufgenommene elektrische Leistung mit steigender Temperatur reduziert wird.

Die Erhöhung der Schadenstoleranz und die Reduzierung des Heizerausfalles in der Fußbodenplatte führen zu einer Zuverlässigkeitssteigerung im Sinne der Betriebssicherheit.

Es wird der Aufbau einer beheizbaren Fußbodenplatte 200 vorgestellt, wie sie beispielsweise bei Flugzeugen im Bereich der Eingangstüren und der Galleys (Küchen) vorgesehen ist, um dort die Bereiche, die von der Kabinenheizung weniger gut erreicht werden im Fußbereich zu beheizen.

Die Beheizung dient vornehmlich aber nicht ausschließlich dem Zwecke dem Kabinenpersonal, das im Galleybereich steht, sowie im Bereich der Ausgänge auf sogenannten Cabin Attendant Seats sitzt, ein angenehmes Klima zu verschaffen.

Bei dem hier vorgestellten Ansatz erfolgt der Aufbau der heizbaren Platten 200 so, dass eine gewisse Schadenstoleranz bezüglich der bislang beobachteten Schadensarten hergestellt wird. Schadensursachen sind beispielsweise punktuell einwirkende mechanische Lasten, Umwelteinflüsse wie Feuchtigkeit und Nässe oder Luftdruck- und Temperaturzyklen.

Zur Vermeidung von Überhitzung durch Ausfall oder Fehlfunktion regelungstechnischer Elemente wird ein quasi selbstbegrenzendes Heizelement 104 mit PTC-Technik verwendet, bei dem der elektrische Innenwiderstand des Heizelements 104 mit steigender Temperatur ansteigt und damit der Strom beziehungsweise die Temperatur auch ohne externe regelungstechnische Überwachung begrenzt wird.

Dabei wird dieses so hergestellt, dass eine gewisse Flexibilität des Heizelements 104 erreicht wird, indem ein PTC-Lack oder eine streichfähige PTC-Masse auf eine flexible Folie als Schicht aufgetragen wird.

Das PTC-Heizelement 104 ist temperaturabhängig frei dehnbar angeordnet. Dadurch wird der PTC-Effekt unterstützt. Das Heizelement 104 ist dabei nicht direkt und starr mit dem faserverstärkten Laminat 102 verbunden, weil dieses die Wärmedehnung behindern würde. Für die freie Dehnbarkeit kann das Heizelement 104 entweder in eine Gleitebene oder eine elastische Ebene eingebettet sein.

Zur Vermeidung von mechanischen Einflüssen auf die Heizfunktion der Fußbodenplatte 200 wird ein Aufbau eingeführt, wodurch eine mechanische Beschädigung von der Oberseite nicht zwangsläufig zum sofortigen Ausfall des Heizelements 104 führt.

Dies wird dadurch erreicht, dass das aktive Heizelement 104 nicht an einer der oberen Decklagen, sondern in der Tiefe der Fußbodenplatte 200 angeordnet ist. Hierbei ist oberhalb des Heizelements 104 ein Laminat beziehungsweise eine Sandwichstruktur angeordnet, die ihrerseits ertüchtigt ist, die Wärme vom Heizelement 104 bis an die Oberfläche der Fußbodenplatte 200 zu leiten. Dadurch kann das Laminat beziehungsweise die Sandwichstruktur oberhalb des Heizelements 104 verletzt werden, ohne dass das Heizelement 104 direkt betroffen ist.

Mit anderen Worten wird eine Fußbodenplatte 200 mit einer Heizeinrichtung 104 zum Einsatz vornehmlich aber nicht ausschließlich in Flugzeugkabinen vorgestellt. Die von der Heizeinrichtung 104 abgegebene Wärme wird durch die wärmeleitende Eigenschaft des Plattenaufbaus an die Oberfläche transportiert. Dazu ist oberhalb des Heizers 104 ein Laminat beziehungsweise ein Sandwichaufbau eingesetzt. Alternativ ist oberhalb des Heizers ein Decklaminat oder ein Decklaminat mit Kernmaterial eingesetzt, das bezüglich der Wärmeleitung optimiert beziehungsweise optimal gewählt ist und dabei eine Schadenstoleranz gegen mechanische Einflüsse aufweist.

In einem Ausführungsbeispiel ist die Platte gegen eindringende Feuchtigkeit so gestaltet, dass keine elektrisch aktiven Teile durch die Feuchtigkeit erreicht werden können.

In einem Ausführungsbeispiel weist der zumindest eine elektrische Heizer 104 eine PTC-Charakteristik zur Temperaturselbstbegrenzung auf.

In einem Ausführungsbeispiel ist die elektrische Kontaktierung der PTC Fläche so ausgeführt, dass eine einzelne punktuelle Beschädigung nicht zum kompletten Heizerausfall führt.

Fig. 7 zeigt ein Ablaufdiagramm eines Verfahrens zum Herstellen einer Heizvorrichtung gemäß einem Ausführungsbeispiel. Das Verfahren weist einen Schritt 600 des Bereitstellens und einen Schritt 602 des Anordnens auf. Im Schritt 600 werden eine mechanisch belastbare Tragstruktur und eine mechanisch belastbare und wärmeleitende Deckstruktur bereitgestellt. Im Schritt 602 wird ein Heizer zwischen der Tragstruktur und der Deckstruktur angeordnet. Beispielsweise wird im Schritt 602 ein Widerstandsmaterial des Heizers in flüssiger oder streichbarer Form auf eine Oberfläche der Tragstruktur und/oder der Deckstruktur aufgetragen.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Heizvorrichtung (100) für einen Flugzeuginnenraum, mit folgenden Merkmalen:
einer mechanisch belastbaren Tragstruktur (102);
einer mechanisch belastbaren und wärmeleitenden Deckstruktur (106); und
einem Heizer (104) zum Umwandeln von elektrischer Energie in Wärmeenergie, wobei der Heizer (104) zwischen der Tragstruktur (102) und der Deckstruktur (106) angeordnet ist und eine Heizschicht aus einem Widerstandsmaterial (108) mit einem positiven Temperaturkoeffizienten aufweist, **dadurch gekennzeichnet, dass** die Heizschicht zumindest bereichsweise Perforationen (105) aufweist und durch die Perforationen (105) befüllbare Hohlräume zwischen der Tragstruktur (102) und der Deckstruktur (106) bereitgestellt werden.

2. Heizvorrichtung (100) gemäß Anspruch 1, bei der eine Oberfläche der Deckstruktur (106) als Trittfläche (202) einer Fußbodenplatte (200) ausgebildet ist.

3. Heizvorrichtung (100) gemäß einem der vorhergehenden Ansprüche, bei der die Deckstruktur (106) ein Laminat aus einem Kern (112) zwischen zwei Decklagen (110) ist, wobei der Kern (112) ein Wabenkern aus einem Metallmaterial ist.

4. Heizvorrichtung (100) gemäß Anspruch 3, bei der eine Oberfläche des Wabenkerns (112) einen Korrosionsschutz aufweist.

5. Heizvorrichtung (100) gemäß Anspruch 1 oder 2, bei der die Deckstruktur (106) ein Laminat aus einem Kern (112) zwischen zwei Decklagen (110) ist, wobei der Kern (112) aus einem wärmeisolierenden Material ist und die Decklagen (110) durch den Kern (112) mit wärmeleitenden Wärmebrücken (114) verbunden sind.

6. Heizvorrichtung (100) gemäß Anspruch 5, bei der die Wärmebrücken (114) durch zumindest einen in den Kern (112) eingenähten Faden realisiert sind.

7. Heizvorrichtung (100) gemäß Anspruch 5 oder 6, bei der die Wärmebrücken (114) ergänzend durch modifiziertes Matrix-Material realisiert sind.

8. Heizvorrichtung (100) gemäß einem der Ansprüche 3 bis 7, bei der die Decklagen (110) in einem umlaufenden Randbereich (208) direkt miteinander verbunden sind.

9. Heizvorrichtung (100) gemäß einem der vorhergehenden Ansprüche, bei der der Heizer (104) unter Verwendung eines elastischen oder gleitebenen Materials (116) mit der Tragstruktur (102) und/oder der Deckstruktur (106) verbunden ist.

10. Heizvorrichtung (100) gemäß einem der Ansprüche 1 bis 8, bei der die Tragstruktur (102) und die Deckstruktur (106) in einem Randbereich (204) zumindest abschnittsweise miteinander verbunden sind und die Heizschicht aus dem Widerstandsmaterial (108) zwischen der Tragstruktur (102) und der Deckstruktur (106) schwimmend angeordnet ist.

11. Heizvorrichtung (100) gemäß einem der vorhergehenden Ansprüche, bei der die Heizschicht aus dem Widerstandsmaterial (108) fluiddicht zwischen der Tragstruktur (102) und der Deckstruktur (106) eingeschlossen ist.

12. Heizvorrichtung (100) gemäß einem der vorhergehenden Ansprüche, bei der die Heizschicht aus dem Widerstandsmaterial (108) eine aus einem flüssigen oder streichfähigen Widerstandsmaterial auf die Tragstruktur (102) oder die Deckstruktur (106) aufgebrachte Schicht ist.

13. Verfahren zum Herstellen einer Heizvorrichtung (100) für einen Flugzeuginnenraum, wobei das Verfahren die folgenden Schritte aufweist:
Bereitstellen (600) einer mechanisch belastbaren Tragstruktur (102) und einer mechanisch belastbaren und wärmeleitenden Deckstruktur (106); und
Anordnen eines Heizers (104) zum Umwandeln von elektrischer Energie in Wärmeenergie zwischen der Tragstruktur (102) und der Deckstruktur (106), wobei der Heizer (104) eine Heizschicht aus einem Widerstandsmaterial (108) mit einem positiven Temperaturkoeffizienten aufweist, **dadurch gekennzeichnet, dass** die Heizschicht zumindest bereichsweise Perforationen (105) aufweist und durch die Perforationen (105) befüllbare Hohlräume zwischen der Tragstruktur (102) und der Deckstruktur (106) bereitgestellt werden.

## Claims

1. Heating device (100) for an aircraft interior, having the following features:
a mechanically load-bearing supporting structure (102) ;
a mechanically load-bearing and heat-conducting covering structure (106); and
a heater (104) for converting electrical energy into thermal energy, wherein the heater (104) is arranged between the supporting structure (102) and the covering structure (106) and has a heating layer of a resistance material (108) with a positive temperature coefficient, **characterized in that** the heating layer has perforations (105) at least in certain regions and, as a result of the perforations (105), fillable cavities are provided between the supporting structure (102) and the covering structure (106).

2. Heating device (100) according to Claim 1, in which a surface of the covering structure (106) is formed as a tread surface (202) of a floor panel (200).

3. Heating device (100) according to one of the preceding claims, in which the covering structure (106) is a laminate composed of a core (112) between two covering layers (110), wherein the core (112) is a honeycomb core of a metal material.

4. Heating device (100) according to Claim 3, in which a surface of the honeycomb core (112) has corrosion protection.

5. Heating device (100) according to Claim 1 or 2, in which the covering structure (106) is a laminate composed of a core (112) between two covering layers (110), wherein the core (112) is of a heat-insulating material and the covering layers (110) are connected through the core (112) by heat-conducting heat bridges (114).

6. Heating device (100) according to Claim 5, in which the heat bridges (114) are realized by at least one thread sewn into the core (112).

7. Heating device (100) according to Claim 5 or 6, in which the heat bridges (114) are realized additionally by modified matrix material.

8. Heating device (100) according to one of Claims 3 to 7, in which the covering layers (110) are directly connected to one another in a peripheral edge region (208) .

9. Heating device (100) according to one of the preceding claims, in which the heater (104) is connected to the supporting structure (102) and/or the covering structure (106) using an elastic or slip-plane-like material (116).

10. Heating device (100) according to one of Claims 1 to 8, in which the supporting structure (102) and the covering structure (106) are at least in certain portions connected to one another in an edge region (204) and the heating layer of the resistance material (108) is arranged in a floating manner between the supporting structure (102) and the covering structure (106).

11. Heating device (100) according to one of the preceding claims, in which the heating layer of the resistance material (108) is enclosed in a fluidtight manner between the supporting structure (102) and the covering structure (106).

12. Heating device (100) according to one of the preceding claims, in which the heating layer of the resistance material (108) is a layer of a liquid or spreadable resistance material which is applied to the supporting structure (102) or the covering structure (106).

13. Method for producing a heating device (100) for an aircraft interior, wherein the method has the following steps:
providing (600) a mechanically load-bearing supporting structure (102) and a mechanically load-bearing and heat-conducting covering structure (106); and
arranging a heater (104) for converting electrical energy into thermal energy between the supporting structure (102) and the covering structure (106), wherein the heater (104) has a heating layer of a resistance material (108) with a positive temperature coefficient, **characterized in that** the heating layer has perforations (105) at least in certain regions and, as a result of the perforations (105), fillable cavities are provided between the supporting structure (102) and the covering structure (106).

## Revendications

1. Dispositif de chauffage (100) pour un espace interne d'un avion, comprenant les caractéristiques suivantes :
une structure porteuse (102) pouvant être sollicitée mécaniquement ;
une structure de recouvrement (106) pouvant être sollicitée mécaniquement et thermoconductrice ; et un radiateur (104) pour convertir de l'énergie électrique en énergie thermique, le radiateur (104) étant disposé entre la structure porteuse (102) et la structure de recouvrement (106) et présentant une couche chauffante constituée d'un matériau résistant (108) avec un coefficient de température positif, **caractérisé en ce que** la couche chauffante présente au moins en partie des perforations (105) et des cavités pouvant être remplies à travers les perforations (105) sont prévues entre la structure porteuse (102) et la structure de recouvrement (106).

2. Dispositif de chauffage (100) selon la revendication 1, dans lequel une surface de la structure de recouvrement (106) est réalisée sous forme de surface de marche (202) d'un panneau de plancher (200).

3. Dispositif de chauffage (100) selon l'une quelconque des revendications précédentes, dans lequel la structure de recouvrement (106) est un stratifié constitué d'un noyau (112) entre deux couches de recouvrement (110), le noyau (112) étant un noyau en nid d'abeilles constitué d'un matériau métallique.

4. Dispositif de chauffage (100) selon la revendication 3, dans lequel une surface du noyau en nid d'abeilles (112) présente une protection contre la corrosion.

5. Dispositif de chauffage (100) selon la revendication 1 ou 2, dans lequel la structure de recouvrement (106) est un stratifié constitué d'un noyau (112) entre deux couches de recouvrement (110), le noyau (112) étant constitué d'un matériau thermiquement isolant et les couches de recouvrement (110) étant connectées à des ponts thermiques thermoconducteurs (114) par le noyau (112) .

6. Dispositif de chauffage (100) selon la revendication 5, dans lequel les ponts thermiques (114) sont réalisés par au moins un fil cousu dans le noyau (112).

7. Dispositif de chauffage (100) selon la revendication 5 ou 6, dans lequel les ponts thermiques (114) sont complétés par un matériau de matrice modifié.

8. Dispositif de chauffage (100) selon l'une quelconque des revendications 3 à 7, dans lequel les couches de recouvrement (110) sont connectées directement les unes aux autres dans une région de bord périphérique (208).

9. Dispositif de chauffage (100) selon l'une quelconque des revendications précédentes, dans lequel le radiateur (104) est connecté à la structure porteuse (102) et/ou à la structure de recouvrement (106) en utilisant un matériau élastique ou plan lisse (116).

10. Dispositif de chauffage (100) selon l'une quelconque des revendications 1 à 8, dans lequel la structure porteuse (102) et la structure de recouvrement (106) sont connectées l'une à l'autre au moins en partie dans une région de bord (204) et la couche chauffante constituée du matériau résistant (108) est disposée de manière flottante entre la structure porteuse (102) et la structure de recouvrement (106).

11. Dispositif de chauffage (100) selon l'une quelconque des revendications précédentes, dans lequel la couche chauffante constituée du matériau résistant (108) est incluse de manière étanche aux fluides entre la structure porteuse (102) et la structure de recouvrement (106).

12. Dispositif de chauffage (100) selon l'une quelconque des revendications précédentes, dans lequel la couche chauffante constituée du matériau résistant (108) est une couche constituée d'un matériau résistant fluide ou pouvant être étalé appliquée sur la structure porteuse (102) ou la structure de recouvrement (106).

13. Procédé pour fabriquer un dispositif de chauffage (100) pour un espace interne d'un avion, le procédé présentant les étapes suivantes :
fourniture (600) d'une structure porteuse (102) pouvant être sollicitée mécaniquement et d'une structure de recouvrement (106) pouvant être sollicitée mécaniquement et thermoconductrice ; et agencement d'un radiateur (104) pour convertir de l'énergie électrique en énergie thermique entre la structure porteuse (102) et la structure de recouvrement (106), le radiateur (104) présentant une couche chauffante constituée d'un matériau résistant (108) avec un coefficient de température positif, **caractérisé en ce que** la couche chauffante présente au moins en partie des perforations (105) et des cavités pouvant être remplies à travers les perforations (105) sont prévues entre la structure porteuse (102) et la structure de recouvrement (106).
